# EUROPEAN PATENT APPLICATION

(11) **EP 4 648 514 A1**
(43) Date of publication of application: **12.11.2025**
(21) Application number: 24766352.9
(22) Date of filing: 01.03.2024
(51) Int. Cl.: H04W 72/0446

(54) **COMMUNICATION METHOD AND COMMUNICATION APPARATUS**

(30) Priority: 06.03.2023 CN 202310254895
(71) Applicant: Huawei Technologies Co., Ltd., Shenzhen, Guangdong 518129 (CN)
(72) Inventor: CAO, Youlong, Shenzhen, Guangdong 518129 (CN); QIN, Yi, Shenzhen, Guangdong 518129 (CN); XU, Rui, Shenzhen, Guangdong 518129 (CN); FU, Yu, Shenzhen, Guangdong 518129 (CN)
(74) Representative: Maiwald GmbH
(86) International application number: PCT/CN2024/079577
(87) International publication number: WO 2024/183633

(57) **Abstract**

This application provides a communication method and a communication apparatus. The communication method may include: A network device sends first information and second information to a first terminal device, where the first information indicates a first resource, the second information indicates a second resource, the first resource is a dedicated resource of the first terminal device, the second resource is a shared resource of a plurality of terminal devices, and the plurality of terminal devices include the first terminal device. The first terminal device receives the first information and the second information, and sends, on the first resource or on the first resource and the second resource, uplink data to the network device based on the first information and the second information. The communication method in this application helps improve resource utilization.

## Description

This application claims priority to Chinese Patent Application No. 202310254895.0, filed with the China National Intellectual Property Administration on March 6, 2023 and entitled "COMMUNICATION METHOD AND COMMUNICATION APPARATUS", which is incorporated herein by reference in its entirety.

### TECHNICAL FIELD

This application relates to the communication field, and in particular, to a communication method and a communication apparatus.

### BACKGROUND

With continuous progress and improvement of extended reality (extended reality, XR) technologies, the XR technologies can implement remote touch and remote control. Generally, a terminal device may collect a tactile signal via a tactile sensor, encodes the tactile signal to obtain an encoded tactile signal, and then transmits the encoded tactile signal to a controlled end via a network device. In other words, the terminal device first sends the encoded tactile signal to the network device, and then the network device forwards the encoded tactile signal to the controlled end.

Currently, the terminal device may send the encoded tactile signal to the network device based on a resource allocated by the network device. However, an amount of data carried by the resource allocated by the network device is fixed. If the fixed resource allocated by the network device is relatively large, and the encoded tactile signal includes a relatively small amount of data, a resource waste is caused. If the fixed resource allocated by the network device is relatively small, and the encoded tactile signal includes a relatively large amount of data, data transmission cannot be performed in time.

Therefore, a communication method in which an allocated resource can be properly used is urgently needed.

### SUMMARY

This application provides a communication method and a communication apparatus, to help improve resource utilization.

According to a first aspect, a communication method is provided, and may be applied to a first terminal device. The method includes: receiving first information and second information, where the first information indicates a first resource, the second information indicates a second resource, the first resource is a dedicated resource of the first terminal device, the second resource is a shared resource of a plurality of terminal devices, and the plurality of terminal devices include the first terminal device; and sending uplink data on the first resource or on the first resource and the second resource.

Both the first resource and the second resource may be at least one of a time domain resource, a space domain resource, or a frequency domain resource. The first resource is the dedicated resource of the first terminal device. In other words, the first terminal device can transmit the uplink data by using the first resource, and a terminal device other than the first terminal device cannot transmit uplink data by using the first resource. The second resource is the shared resource of the plurality of terminal devices. In other words, in addition to that the first terminal device can transmit the uplink data by using the second resource, another terminal device can also transmit uplink data by using the second resource. It may be understood that, the first terminal device is merely an example, and a network device may allocate a dedicated resource and a shared resource to all terminal devices in a coverage area of the network device.

An amount of data that can be carried by the first resource and an amount of data that can be carried by the second resource are not limited in this application.

The network device may send the first information and the second information to the first terminal device in advance. In other words, the network device may allocate a resource to the first terminal device in advance. When the first terminal device needs to send the uplink data, the first terminal device may transmit the uplink data on the pre-allocated resource.

When the first terminal device needs to send the uplink data, there are two possible cases in which the first terminal device sends the uplink data.

**In** a first case, the first terminal device sends, on the first resource, the uplink data to the network device, and correspondingly, the network device receives the uplink data on the first resource. In this case, another terminal device may occupy the second resource, so that no resource waste is caused, and resource utilization is improved.

In a second case, the first terminal device sends, on the first resource and the second resource, the uplink data to the network device, and correspondingly, the network device receives the uplink data on the first resource and the second resource. In this case, the first resource and the second resource may carry a large amount of data, to facilitate transmission of the uplink data in time.

When the first terminal device needs to send the uplink data, the first terminal device may determine, based on an amount of the data, whether to use the second resource. If the amount of the data is less than or equal to the amount of the data that can be carried by the first resource, the first terminal device does not use the second resource, and sends the uplink data only by using the first resource; or if the amount of the data is greater than the amount of the data that can be carried by the first resource, the first terminal device sends the uplink data by jointly using the first resource and the second resource.

According to the communication method provided in this application, the network device may allocate the dedicated resource and the shared resource to the terminal device. When a relatively small amount of uplink data needs to be transmitted, the terminal device may send the uplink data on the dedicated resource. When a relatively large amount of uplink data needs to be transmitted, the terminal device may send the uplink data on the dedicated resource and the shared resource. In this implementation, when the amount of the data is large, the terminal device may send, by using the shared resource, data that cannot be carried by the dedicated resource, to avoid an excessively long transmission delay. When the amount of the data is small, another terminal device may occupy the shared resource, so that no resource waste is caused, and the resource utilization is improved.

With reference to the first aspect, in some implementations of the first aspect, the first information is carried in first downlink control information (downlink control information, DCI), and the second information is carried in second DCI.

According to the communication method provided in this application, different pieces of information are indicated by different pieces of DCI, so that a small quantity of bytes of the DCI is occupied.

With reference to the first aspect, in some implementations of the first aspect, a slot in which the first resource is located is the same as a slot in which the second resource is located.

The slot in which the first resource is located is the same as the slot in which the second resource is located. In other words, the first DCI and the second DCI indicate a same slot for the first terminal device to perform uplink data transmission.

According to the communication method provided in this application, the first terminal device may simultaneously send the uplink data on the first resource and the second resource. This helps send the uplink data in time, and improves a data transmission rate.

With reference to the first aspect, in some implementations of the first aspect, both the first DCI and the second DCI include a first identifier, and the first identifier indicates a dedicated resource or a shared resource.

According to the communication method provided in this application, the first identifier indicates the dedicated resource or the shared resource, so that a dedicated resource can be distinguished from a shared resource in resources indicated by different pieces of DCI, and the first terminal device can accurately use a resource to perform uplink transmission.

With reference to the first aspect, in some implementations of the first aspect, the first DCI and the second DCI are scrambled by using different radio network temporary identifiers (radio network temporary identifiers, RNTIs).

According to the communication method provided in this application, the different RNTIs indicate the dedicated resource or the shared resource, so that a dedicated resource can be distinguished from a shared resource in resources indicated by different pieces of DCI, and the first terminal device can accurately use a resource to perform uplink transmission.

With reference to the first aspect, in some implementations of the first aspect, both the first information and the second information are carried in third DCI.

According to the communication method provided in this application, different pieces of information are indicated by the same DCI, so that signaling can be saved.

With reference to the first aspect, in some implementations of the first aspect, the third DCI includes a first frequency domain resource allocation (frequency domain resource allocation, FDRA) field and a second FDRA field, the first FDRA field indicates a position of the first resource, and the second FDRA field indicates a position of the second resource.

According to the communication method provided in this application, different FDRA fields indicate the first resource or the second resource, so that a dedicated resource can be distinguished from a shared resource in resources indicated by different pieces of DCI, and the first terminal device can accurately use a resource to perform uplink transmission.

With reference to the first aspect, in some implementations of the first aspect, sending the uplink data on the first resource and the second resource includes: sending, on the first resource, a first part of data in a first transport block (transmission block, TB), and sending, on the second resource, a second part of data in the first TB.

The first terminal device sends, on the first resource, the first part of data in the first TB to the network device, and sends, on the second resource, the second part of data in the first TB to the network device. That is, the first TB occupies the dedicated resource and the shared resource. In other words, the first terminal device sends one TB of uplink data on the first resource and the second resource.

According to the communication method provided in this application, the first terminal device sends one TB of uplink data on the first resource and the second resource, and one TB corresponds to one MCS. This helps reduce complexity of encoding and decoding.

With reference to the first aspect, in some implementations of the first aspect, sending the uplink data on the first resource and the second resource includes: sending the first TB on the first resource, and sending a second TB on the second resource.

The first terminal device sends, on the first resource, the first TB to the network device, and sends, on the second resource, the second TB to the network device. In other words, the first terminal device sends, on the first resource, one TB to the network device, and sends, on the second resource, another TB to the network device. In other words, the first terminal device may send a TB of uplink data on each of the dedicated resource and the shared resource.

According to the communication method provided in this application, the first terminal device sends the TB of the uplink data on each of the first resource and the second resource. Different TBs may correspond to different MCSs, and may be used in different scenarios, so that flexibility is higher.

With reference to the first aspect, in some implementations of the first aspect, the third DCI includes a modulation and coding scheme (modulation and coding scheme, MCS) offset, and the MCS offset indicates an MCS deviation of the second resource relative to the first resource.

The first terminal device may use independent MCSs on different resources. The first resource is a dedicated resource, and the second resource is a shared resource. The shared resource may be used by a plurality of users together. This results in increased interference. Therefore, a lower MCS may be used on the second resource. In other words, an MCS order corresponding to the second resource may be less than an MCS order corresponding to the first resource.

The first resource and the second resource are indicated by the third DCI. The third DCI may include the MCS offset, and the MCS offset indicates the MCS deviation of the second resource relative to the first resource. The third DCI may further indicate an MCS of the first resource. The first terminal device receives the third DCI, and may determine the MCS of the first resource and an MCS of the second resource based on the third DCI. The MCS of the second resource is equal to the MCS of the first resource minus the MCS offset.

According to the communication method provided in this application, in comparison with directly indicating the MCS of the second resource, MCS offset indication information is added to the third DCI, so that fewer bits can be occupied.

With reference to the first aspect, in some implementations of the first aspect, when the uplink data is sent on the first resource and the second resource, data sent by the first terminal device on the second resource includes data of a first logical channel group.

According to the communication method provided in this application, the data of the first logical channel group is sent on the second resource. This helps increase a data transmission rate of the first logical channel group.

With reference to the first aspect, in some implementations of the first aspect, the method further includes: receiving third information, where the third information indicates to use the second resource when an amount of the data of the first logical channel group is greater than an amount of data that can be carried by the first resource.

According to the communication method provided in this application, the first terminal device uses the second resource based on the indication of the third information when the amount of the data of the first logical channel group is greater than the amount of the data that can be carried by the first resource, so that the first terminal device can use resources more properly.

With reference to the first aspect, in some implementations of the first aspect, when the uplink data is sent on the first resource and the second resource, the method further includes: sending fourth information, where the fourth information indicates that the first terminal device has sent the uplink data on the second resource.

If the first terminal device has sent the uplink data on the second resource, the first terminal device may notify, by using the fourth information, the network device that the first terminal device has sent the uplink data on the second resource, and the network device may obtain, from the first resource and the second resource, based on the fourth information, the uplink data sent by the first terminal device.

According to the communication method provided in this application, it can be learned that uplink data sent by the first terminal device can be accurately received.

With reference to the first aspect, in some implementations of the first aspect, sending the fourth information includes: sending the fourth information on the first resource.

According to the communication method provided in this application, the second resource is the shared resource, and interference is relatively large. In comparison with occupying the second resource, the fourth information occupies the first resource and interference is relatively small. This helps improve accuracy of obtaining the fourth information by the network device.

According to a second aspect, a communication method is provided, and may be applied to a network device. The method includes: sending first information and second information, where the first information indicates a first resource, the second information indicates a second resource, the first resource is a dedicated resource of a first terminal device, the second resource is a shared resource of a plurality of terminal devices, and the plurality of terminal devices include the first terminal device; and receiving, on the first resource or on the first resource and the second resource, uplink data from the first terminal device.

With reference to the second aspect, in some implementations of the second aspect, the first information is carried in first downlink control information DCI, and the second information is carried in second DCI.

With reference to the second aspect, in some implementations of the second aspect, a slot in which the first resource is located is the same as a slot in which the second resource is located.

With reference to the second aspect, in some implementations of the second aspect, both the first DCI and the second DCI include a first identifier, and the first identifier indicates a dedicated resource or a shared resource.

With reference to the second aspect, in some implementations of the second aspect, the first DCI and the second DCI are scrambled by using different radio network temporary identifiers RNTIs.

With reference to the second aspect, in some implementations of the second aspect, both the first information and the second information are carried in third DCI.

With reference to the second aspect, in some implementations of the second aspect, the third DCI includes a first frequency domain resource allocation FDRA field and a second FDRA field, the first FDRA field indicates a position of the first resource, and the second FDRA field indicates a position of the second resource.

With reference to the second aspect, in some implementations of the second aspect, receiving, on the first resource and the second resource, the uplink data from the first terminal device includes: receiving, on the first resource, a first part of data in a first transmission block TB from the first terminal device, and receiving, on the second resource, a second part of data in the first TB from the first terminal device.

With reference to the second aspect, in some implementations of the second aspect, receiving, on the first resource and the second resource, the uplink data from the first terminal device includes: receiving, on the first resource, the first TB from the first terminal device, and receiving, on the second resource, a second TB from the first terminal device.

With reference to the second aspect, in some implementations of the second aspect, the third DCI includes a modulation and coding scheme MCS offset, and the MCS offset indicates an MCS deviation of the second resource relative to the first resource.

With reference to the second aspect, in some implementations of the second aspect, when the uplink data from the first terminal device is received on the first resource and the second resource, data received on the second resource includes data of a first logical channel group.

With reference to the second aspect, in some implementations of the second aspect, the method further includes: sending third information, where the third information indicates the first terminal device to use the second resource when an amount of the data of the first logical channel group is greater than an amount of data that can be carried by the first resource.

With reference to the second aspect, in some implementations of the second aspect, when the uplink data from the first terminal device is received on the first resource and the second resource, the method further includes: receiving fourth information, where the fourth information indicates that the first terminal device has sent the uplink data on the second resource.

With reference to the second aspect, in some implementations of the second aspect, receiving the fourth information includes: receiving the fourth information on the first resource.

According to a third aspect, a communication apparatus is provided. The apparatus includes a receiving unit and a sending unit. The receiving unit is configured to receive first information and second information, where the first information indicates a first resource, the second information indicates a second resource, the first resource is a dedicated resource of the communication apparatus, the second resource is a shared resource of a plurality of terminal devices, and the plurality of terminal devices include the communication apparatus. The sending unit is configured to send uplink data on the first resource or on the first resource and the second resource.

With reference to the third aspect, in some implementations of the third aspect, the first information is carried in first downlink control information DCI, and the second information is carried in second DCI.

With reference to the third aspect, in some implementations of the third aspect, a slot in which the first resource is located is the same as a slot in which the second resource is located.

With reference to the third aspect, in some implementations of the third aspect, both the first DCI and the second DCI include a first identifier, and the first identifier indicates a dedicated resource or a shared resource.

With reference to the third aspect, in some implementations of the third aspect, the first DCI and the second DCI are scrambled by using different radio network temporary identifiers RNTIs.

With reference to the third aspect, in some implementations of the third aspect, both the first information and the second information are carried in third DCI.

With reference to the third aspect, in some implementations of the third aspect, the third DCI includes a first frequency domain resource allocation FDRA field and a second FDRA field, the first FDRA field indicates a position of the first resource, and the second FDRA field indicates a position of the second resource.

With reference to the third aspect, in some implementations of the third aspect, the sending unit is further configured to: send, on the first resource, a first part of data in a first transmission block TB, and send, on the second resource, a second part of data in the first TB.

With reference to the third aspect, in some implementations of the third aspect, the sending unit is further configured to: send the first TB on the first resource, and send a second TB on the second resource.

With reference to the third aspect, in some implementations of the third aspect, the third DCI includes a modulation and coding scheme MCS offset, and the MCS offset indicates an MCS deviation of the second resource relative to the first resource.

With reference to the third aspect, in some implementations of the third aspect, when the uplink data is sent on the first resource and the second resource, data sent by the first terminal device on the second resource includes data of a first logical channel group.

With reference to the third aspect, in some implementations of the third aspect, the receiving unit is further configured to receive third information, where the third information indicates to use the second resource when an amount of the data of the first logical channel group is greater than an amount of data that can be carried by the first resource.

With reference to the third aspect, in some implementations of the third aspect, the sending unit is further configured to send fourth information, where the fourth information indicates that the first terminal device has sent the uplink data on the second resource.

With reference to the third aspect, in some implementations of the third aspect, the sending unit is further configured to send the fourth information on the first resource.

According to a fourth aspect, a communication apparatus is provided. The apparatus includes a sending unit and a receiving unit. The sending unit is configured to send first information and second information, where the first information indicates a first resource, the second information indicates a second resource, the first resource is a dedicated resource of a first terminal device, the second resource is a shared resource of a plurality of terminal devices, and the plurality of terminal devices include the first terminal device. The receiving unit is configured to receive, on the first resource or on the first resource and the second resource, uplink data from the first terminal device.

With reference to the fourth aspect, in some implementations of the fourth aspect, the first information is carried in first downlink control information DCI, and the second information is carried in second DCI.

With reference to the fourth aspect, in some implementations of the fourth aspect, a slot in which the first resource is located is the same as a slot in which the second resource is located.

With reference to the fourth aspect, in some implementations of the fourth aspect, both the first DCI and the second DCI include a first identifier, and the first identifier indicates a dedicated resource or a shared resource.

With reference to the fourth aspect, in some implementations of the fourth aspect, the first DCI and the second DCI are scrambled by using different radio network temporary identifiers RNTIs.

With reference to the fourth aspect, in some implementations of the fourth aspect, both the first information and the second information are carried in third DCI.

With reference to the fourth aspect, in some implementations of the fourth aspect, the third DCI includes a first frequency domain resource allocation FDRA field and a second FDRA field, the first FDRA field indicates a position of the first resource, and the second FDRA field indicates a position of the second resource.

With reference to the fourth aspect, in some implementations of the fourth aspect, the receiving unit is further configured to: receive, on the first resource, a first part of data in a first transmission block TB from the first terminal device, and receive, on the second resource, a second part of data in the first TB from the first terminal device.

With reference to the fourth aspect, in some implementations of the fourth aspect, the receiving unit is further configured to: receive, on the first resource, the first TB from the first terminal device, and receive, on the second resource, a second TB from the first terminal device.

With reference to the fourth aspect, in some implementations of the fourth aspect, the third DCI includes a modulation and coding scheme MCS offset, and the MCS offset indicates an MCS deviation of the second resource relative to the first resource.

With reference to the fourth aspect, in some implementations of the fourth aspect, when the uplink data from the first terminal device is received on the first resource and the second resource, data received on the second resource includes data of a first logical channel group.

With reference to the fourth aspect, in some implementations of the fourth aspect, the sending unit is further configured to send third information, where the third information indicates the first terminal device to use the second resource when an amount of the data of the first logical channel group is greater than an amount of data that can be carried by the first resource.

With reference to the fourth aspect, in some implementations of the fourth aspect, the receiving unit is further configured to receive fourth information, where the fourth information indicates that the first terminal device has sent the uplink data on the second resource.

With reference to the fourth aspect, in some implementations of the fourth aspect, the receiving unit is further configured to receive the fourth information on the first resource.

According to a fifth aspect, a communication apparatus is provided, including a processor and a memory, where the memory is configured to store a computer program, and the processor is configured to: invoke the computer program from the memory, and run the computer program, to enable the communication apparatus to perform the method according to any one of the possible implementations of the foregoing aspects.

Optionally, there are one or more processors, and there are one or more memories.

Optionally, the memory may be integrated with the processor, or the memory and the processor are separately disposed.

Optionally, the communication apparatus further includes a transmitting machine (transmitter) and a receiving machine (receiver). The transmitting machine and the receiving machine may be separately disposed, or may be integrated together, and are referred to as a transceiver machine (transceiver).

According to a sixth aspect, a communication system is provided, and includes the communication apparatus according to the third aspect and the communication apparatus according to the fourth aspect.

According to a seventh aspect, a communication system is provided, including a transmitter, a receiver, and a processor, where the transmitter is configured to send a signal to another apparatus, the receiver is configured to receive a signal from the another apparatus, the processor is coupled to a memory, the memory is configured to store a computer program, and when the processor invokes the computer program, the communication apparatus is enabled to perform the method according to any one of the possible implementations of the foregoing aspects.

According to an eighth aspect, a chip system is provided, including a processor, configured to: invoke a computer program from a memory, and run the computer program, to enable a communication device in which the chip system is installed to perform the method according to any one of the possible implementations of the foregoing aspects.

According to a ninth aspect, a computer-readable storage medium is provided, where the computer-readable storage medium stores a computer program (which may also be referred to as code or instructions), and when the computer program is run on a computer, the computer is enabled to perform the method according to any one of the possible implementations of the foregoing aspects.

According to a tenth aspect, a computer program product is provided, where the computer program product includes a computer program (which may also be referred to as code or instructions), and when the computer program is run, a computer is enabled to perform the method according to any one of the possible implementations of the foregoing aspects.

According to an eleventh aspect, a communication apparatus is provided, including units or modules configured to perform the method according to any one of the possible implementations of the first aspect, or including units or modules configured to perform the method according to any one of the possible implementations of the second aspect.

### BRIEF DESCRIPTION OF DRAWINGS

FIG. 1 is a diagram of data transmission in a multi-modal service;
FIG. 2 is a schematic flowchart of a data transmission method;
FIG. 3 is a timing diagram of data transmission;
FIG. 4 is a timing diagram of another data transmission;
FIG. 5 is a schematic flowchart of a configured grant transmission method;
FIG. 6 is a schematic flowchart of another configured grant transmission method;
FIG. 7 is a diagram of transmission of a tactile packet based on a configured grant resource;
FIG. 8 is a diagram of a communication system to which an embodiment of this application is applicable;
FIG. 9 is a schematic flowchart of a communication method according to an embodiment of this application;
FIG. 10 is a diagram of resource allocation according to an embodiment of this application;
FIG. 11 is a timing diagram of data transmission according to an embodiment of this application;
FIG. 12 is a diagram of resource occupation according to an embodiment of this application;
FIG. 13 is a diagram of other resource occupation according to an embodiment of this application;
FIG. 14 is a diagram of still other resource occupation according to an embodiment of this application;
FIG. 15 is a block diagram of a communication apparatus according to an embodiment of this application; and
FIG. 16 is a block diagram of another communication apparatus according to an embodiment of this application.

### DESCRIPTION OF EMBODIMENTS

The following describes technical solutions of this application with reference to the accompanying drawings.

In recent years, with continuous progress and improvement of an XR technology, related industries have developed vigorously. Nowadays, the extended reality technology has entered various fields closely related to production and life of people, such as education, entertainment, military affairs, medical care, environmental protection, transportation, and public health. The XR technology is a general term for various reality-related technologies, and may specifically include virtual reality (virtual reality, VR), augmented reality (augmented reality, AR), and mixed reality (mixed reality, MR). The virtual reality technology mainly refers to rendering of visual and audio scenarios to simulate, as much as possible, sensory stimulation of vision and audio in a real world to a user. In the virtual reality technology, the user usually needs to wear a head-mounted display (head-mounted display, HMD) to completely replace a field of view of the user with a simulated visual component, and at the same time, the user needs to wear a headset to be provided with accompanying audio. In addition, in the VR, head and action tracking usually needs to be performed on the user, to update simulated visual and audio content in time, so that the visual and audio content experienced by the user is consistent with an action of the user. The augmented reality technology mainly refers to provision of additional visual or auditory information or artificially generated content in a real environment perceived by the user. Acquisition of the real environment by the user may be direct, to be specific, without intermediate sensing, processing, and rendering, or may be indirect, to be specific, transferred via a sensor or the like, and augmentation processing is further performed. The mixed reality technology is an advanced form of the AR. One of implementations of the mixed reality technology is to insert some virtual elements into a physical scenario, to provide the user with immersive experience in which the elements are a part of the real scenario.

Currently, a multi-modal service becomes a new service of the XR technology. A dimension of tactile experience is added on a basis of visual, auditory, and kinesthetic dimensions, so that remote touch and remote control can be implemented, and remote perception in a plurality of aspects such as visual, auditory, tactile, and kinesthetic perception can be further implemented. The multi-modal service has great room for development in related fields such as industrial automation, medical care, and distance education, provides users with comprehensive interactive experience, and has great application value and commercial potential.

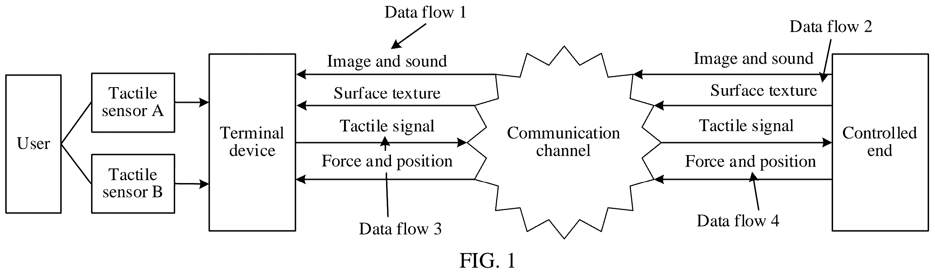

For example, FIG. 1 is a diagram of data transmission in a multi-modal service. As shown in FIG. 1, a user may perform an operation on a controlled end via a terminal device. The controlled end may provide image data and sound data for the user via the terminal device, to provide the user with visual and auditory experience. The controlled end may further provide surface texture data for the user via the terminal device, to provide the user with tactile experience. The controlled end may also provide force data and position data for the user via the terminal device, to provide the user with kinesthetic experience.

Specifically, the controlled end may transmit the image data and the sound data to the terminal device through a communication channel. The terminal device may display an image for the user based on the image data, to provide the user with the visual experience, and may play a sound for the user based on the sound data, to provide the user with the auditory experience. The controlled end may further transmit the surface texture data to the terminal device through the communication channel, and the terminal device may provide the user with the tactile experience based on the surface texture data. When the user performs a touch, the terminal device may collect a tactile signal by using a tactile sensor, and transmit the tactile signal to the controlled end through the communication channel. The controlled end may also transmit, to the terminal device through the communication channel, the force data and the position data that are generated through user operation, and the terminal device may provide the user with kinesthetic experience based on the force data and the position data.

The image data and the sound data may be referred to as a data flow 1, the surface texture data may be referred to as a data flow 2, the tactile signal may be referred to as a data flow 3, and the force data and the position data may be referred to as a data flow 4. In a multi-modal service, transmission of the four data flows are simultaneously performed, and perception experience in a plurality of aspects such as visual, auditory, tactile, and kinesthetic can be provided for the user.

This embodiment of this application mainly studies transmission of the tactile signal by the terminal device through the communication channel. It may be understood that, the terminal device performs the transmission of the tactile signal through the communication channel, in other words, the terminal device first sends the tactile signal to a network device, and then the network device forwards the tactile signal.

The terminal device may send the tactile signal to the network device, or send an encoded tactile signal to the network device. The tactile signal has different service features before and after encoding. Before the encoding, a signal generated by the tactile sensor is periodic. The tactile sensor may generate 500 to 2000 packets per second, and a size of each packet is 12 to 48 bytes. After the tactile signal is encoded, a time point at which the encoded tactile signal arrives at the terminal device is random, a time interval between two arrivals complies with a generalized Pareto distribution, and a size of a packet that arrives each time remains unchanged. If there are a plurality of tactile sensors at the same time, tactile signals generated by the plurality of tactile sensors are independent of each other. After the tactile signals are encoded, time points at which the tactile signals arrive at the terminal device are random. Consequently, an amount of data whose transmission is performed by the terminal device varies. In a standard protocol, a transmission reliability requirement of an unencoded tactile signal is 99.9%, and a delay requirement is 5 milliseconds (millisecond, ms). A transmission reliability requirement of an encoded tactile signal is 99.999%, and a delay requirement is 5 milliseconds.

The terminal device may send the encoded tactile signal to the network device based on a resource allocated by the network device. However, an amount of data carried by the resource allocated by the network device is fixed. When the terminal device transmits the encoded tactile signal to the network device, if the fixed resource allocated by the network device is relatively large, and the encoded tactile signal includes a relatively small amount of data, a resource waste is caused; and if the fixed resource allocated by the network device is relatively small, and the encoded tactile signal includes a relatively large amount of data, data transmission cannot be performed in time.

Currently, there are two methods for encoded tactile signal transmission.

A first method is a dynamic scheduling method. The network device indicates, by using control information, the terminal device to send the encoded tactile signal.

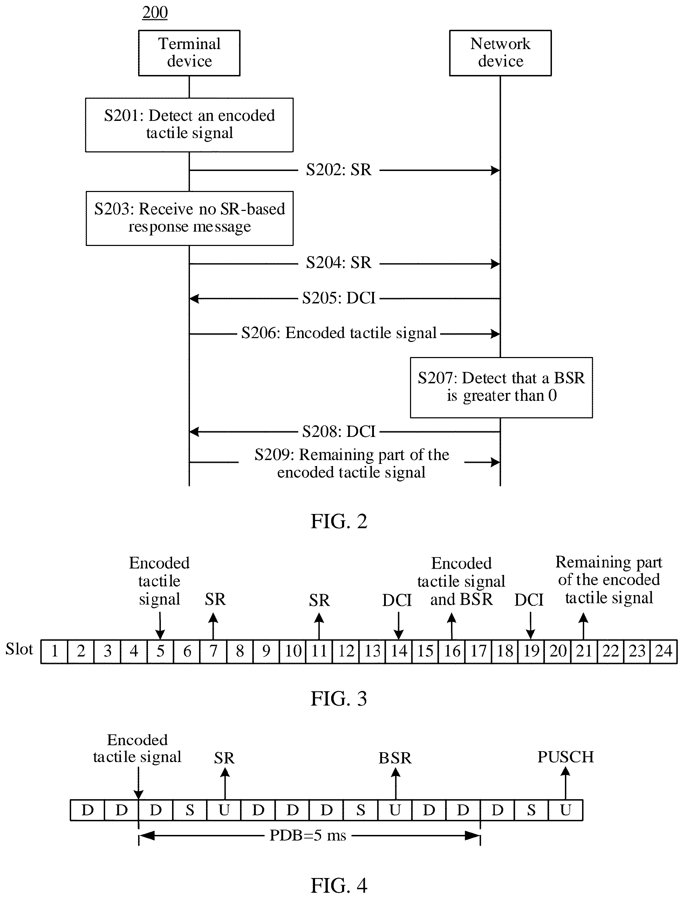

For example, FIG. 2 is a schematic flowchart of a data transmission method 200. As shown in FIG. 2, the method 200 includes the following steps.

S201: A terminal device detects an encoded tactile signal.

That the terminal device detects the encoded tactile signal may also be referred to as an arrival of the encoded tactile signal. The terminal device detects the encoded tactile signal, and may determine that there is uplink data that needs to be sent.

S202: The terminal device may send a scheduling request (scheduling request, SR) to the network device.

Specifically, the terminal device may send the SR to the network device in a physical uplink control channel (physical uplink control channel, PUCCH), to request an uplink grant from the network device.

S203: The terminal device receives no SR-based response message within a period of time.

If the terminal device receives no SR-based response message within a period of time, it may indicate that the terminal device does not obtain the uplink grant from the network device, and the terminal device may continue to send the SR to the network device, that is, perform S204.

S204: The terminal device may send the SR to the network device.

The terminal device sends the SR to the network device again to request the uplink grant from the network device.

S205: The network device receives the SR, and sends DCI to the terminal device based on the SR, and correspondingly, the terminal device receives the DCI.

After receiving the SR, the network device responds to the SR, to be specific, may send the DCI to the terminal device through a physical downlink control channel (physical downlink control channel, PDCCH). For example, a DCI format may be 0_0 or 0_1. The network device may determine, based on the SR, that the terminal device needs a resource to send data, but does not learn of an amount of the data sent by the terminal device. Therefore, the network device may allocate a specific resource to the terminal device by using the DCI. The terminal device may transmit the uplink data on the allocated resource.

S206: The terminal device sends the encoded tactile signal to the network device based on the DCI.

The terminal device may send, on a resource indicated by the DCI, the encoded tactile signal to the network device. For example, the terminal device may send the encoded tactile signal to the network device by using a physical uplink shared channel (physical uplink shared channel, PUSCH) resource allocated by the network device.

When sending the encoded tactile signal, the terminal device may simultaneously notify, by using a buffer status report (buffer status report, BSR), the network device of an amount of data that still needs to be sent. If the network device is notified, by using the BSR, that there is no data that needs to be sent, the network device does not need to allocate a resource again. If the network device is notified, by using the BSR, that there is data that still needs to be sent and a data amount is indicated, the network device may allocate a resource to the terminal device again based on the data amount.

If an amount of data included in the encoded tactile signal is greater than an amount of data that can be carried by the resource indicated by the DCI, the terminal device may notify, by using the BSR, the network device that there is data that still needs to be sent, and indicate an amount of data that needs to be sent. For example, the terminal device may set the BSR to be greater than 0, to represent that there is data that still needs to be sent and indicate the data amount. If an amount of data included in the encoded tactile signal is less than or equal to an amount of data that can be carried by the resource indicated by the DCI, the terminal device may notify, by using the BSR, the network device that there is no data that needs to be sent. For example, the terminal device may set the BSR to be equal to 0, to indicate that no data needs to be sent.

S207: The network device receives the encoded tactile signal, and detects that the BSR is greater than 0.

The network device may determine, based on the BSR being greater than 0, that the network device still has data that needs to be sent, and may continue to allocate a resource to the terminal device.

S208: The network device sends DCI to the terminal device based on the BSR, and correspondingly, the terminal device receives the DCI.

The network device may allocate, to the terminal device by using the DCI, based on the data amount indicated by the BSR, a resource that can carry the amount of the data.

S209: The terminal device sends a remaining part of the encoded tactile signal to the network device based on the DCI.

The terminal device may send, on the resource indicated by the DCI, the encoded tactile signal to the network device.

To better understand the data transmission method, FIG. 3 is a timing diagram of data transmission. As shown in FIG. 3, the terminal device detects, in a slot 5, an encoded tactile signal, and sends, in a slot 7, an SR to the network device. If the terminal device receives no SR-based response message, the terminal device sends, in a slot 11, the SR to the network device again. The terminal device receives, in a slot 14, DCI sent by the network device based on the SR, and sends, in a slot 16, the encoded tactile signal to the network device based on a resource indicated by the DCI. If an amount of data included in the encoded tactile signal is greater than an amount of data that can be carried by the resource indicated by the DCI, the terminal device may send, in a slot 16, a BSR to the network device. The terminal device receives, in a slot 19, DCI sent by the network device based on the BSR, and sends, in a slot 21, a remaining part of the encoded tactile signal to the network device based on a resource indicated by the DCI.

In this implementation, each time the terminal device sends the encoded tactile signal, the terminal device needs to request a resource from the network device, and signaling overheads are high. In addition, when the amount of the data included in the encoded tactile signal is greater than that of a resource allocated by the network device, transmission needs to performed twice, and consequently, a data transmission delay is increased, exceeding a data delay requirement.

For example, FIG. 4 is a timing diagram of data transmission. A slot configuration is DDDSU, and a subcarrier spacing is 30 kHz (kilohertz, kHz). D indicates a downlink slot, S indicates an uplink-downlink switching slot, and U indicates an uplink slot. A length of each slot is 0.5 ms, and a delay requirement of an encoded tactile signal is 5 ms.

The terminal device detects an encoded tactile signal, and sends, in a 1^{st} uplink slot U, an SR to the network device. If the terminal device receives DCI sent by the network device based on the SR, the terminal device may send, in a 2^{nd} uplink slot U, based on a resource indicated by the DCI, the encoded tactile signal to the network device. However, an amount of data included in the encoded tactile signal is greater than an amount of data that can be carried by the resource indicated by the DCI, and the terminal device may send, in the 2^{nd} uplink slot U, a BSR to the network device. If the terminal device receives DCI sent by the network device based on the BSR, the terminal device may send, in a 3^{rd} uplink slot U, based on a resource indicated by the DCI, a remaining part of the encoded tactile signal to the network device. In this case, a packet delay budget (packet delay budget, PDB), that is, a delay requirement of 5 ms, has been exceeded.

It may be understood that if the terminal device receives no DCI sent by the network device based on the SR, duration for sending the encoded tactile signal by the terminal device is to be longer, and the delay requirement of 5 ms cannot be met.

A second method is a configured grant (configured grant, CG) transmission method. The CG transmission method refers to that in an uplink transmission process, an uplink scheduling resource only needs to be allocated or specified once through radio resource control (radio resource control, RRC) or a PDCCH, and then a same time-frequency resource may be periodically and repeatedly used for uplink transmission. The CG transmission method includes two types. Type 1 includes: configuring, through RRC, a related parameter of a CG resource, for example, a configured grant radio network temporary identifier (configured scheduling radio network temporary identifier, CS-RNTI), a CG periodicity, and a time domain resource and a frequency domain resource of the CG; and activating a corresponding CG resource by using RRC signaling. Type 2 is similar to a resource configuration manner of semi persistent scheduling (semi persistent scheduling, SPS), to be specific, the type 2 includes: configuring, through RRC, a related parameter of CG transmission, for example, a CS-RNTI and a CG periodicity; and activating a corresponding CG resource and indicating an allocated frequency domain resource through a PDCCH.

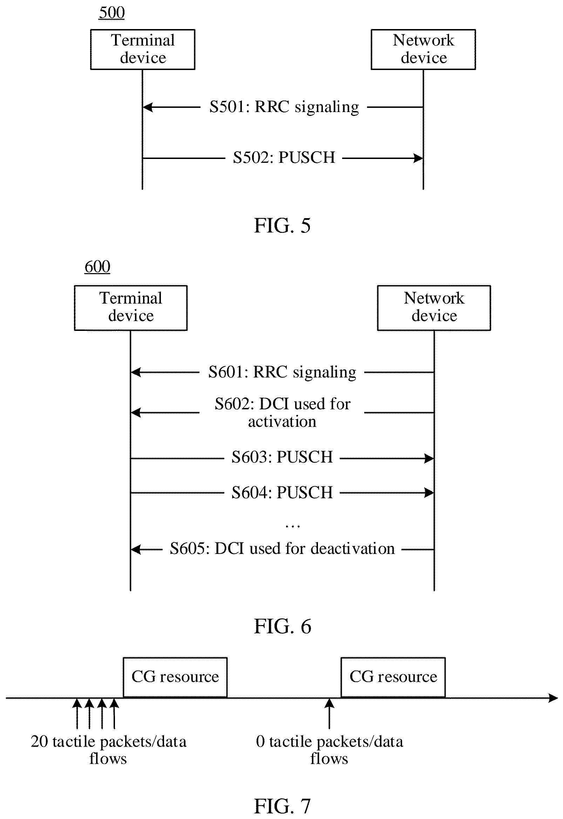

For example, FIG. 5 is a schematic flowchart of a CG transmission method. As shown in FIG. 5, the method 500 may include the following steps.

S501: A network device sends RRC signaling to a terminal device, where the RRC signaling is used to configure a related parameter of a CG resource, and correspondingly, the terminal device receives the RRC signaling.

The related parameter of the CG resource may include: a CS-RNTI, a CG periodicity, a hybrid automatic repeat request (Hybrid Automatic Repeat request, HARQ) process number and an offset value, a specific value of an MCS, FDRA, time domain resource allocation (time domain resource allocation, TDRA), and a repetition count. The FDRA indicates resources that the terminal device needs to occupy in frequency domain, and the TDRA indicates symbols (symbols) that the terminal device needs to occupy in a slot (slot) and a specific slot in which uplink data is sent.

S502: The terminal device sends the uplink data to the network device based on the related parameter of the CG resource in the RRC signaling through a PUSCH.

The RRC signaling activates the CG resource, and the terminal device may send the uplink data based on the CG resource through the PUSCH.

The uplink data may be the foregoing encoded tactile signal, but this embodiment of this application is not limited thereto.

For example, FIG. 6 is a schematic flowchart of another CG transmission method. As shown in FIG. 6, the method 600 may include the following steps.

S601: A network device sends RRC signaling to a terminal device, where the RRC signaling is used to configure a related parameter of a CG resource, and correspondingly, the terminal device receives the RRC signaling.

The related parameter of the CG resource may include a CS-RNTI, a CG periodicity, and the like. Related parameters of CG resources corresponding to different periodicities may be different or may be the same. This is not limited in this embodiment of this application.

S602: The network device sends DCI used for activation to the terminal device, and correspondingly, the terminal device receives the DCI used for activation.

The DCI used for activation further includes information such as a specific value of an MCS and FDRA. The DCI used for activation is used to activate the CG resource, in other words, the terminal device may transmit uplink data based on the CG resource.

For example, the network device may send the DCI used for activation to the terminal device through a PDCCH.

S603: The terminal device sends the uplink data to the network device through a PUSCH based on the DCI used for activation.

The CG resource periodically takes effect, and the terminal device may send the uplink data to the network device through the PUSCH in a period in which the CG resource is effective.

The uplink data may be the foregoing encoded tactile signal, but this embodiment of this application is not limited thereto.

S604: The terminal device sends the uplink data to the network device through the PUSCH based on the parameter indicated by the DCI used for activation.

The CG resource periodically takes effect, and the terminal device may send the uplink data to the network device through the PUSCH in the period in which the CG resource is effective.

After the CG resource periodically takes effect, if the CG resource is not deactivated, the terminal device may keep sending the uplink data to the network device through the PUSCH in the period in which the CG resource is effective.

S605: The network device sends DCI used for deactivation to the terminal device, and correspondingly, the terminal device receives the DCI used for deactivation.

The terminal device receives the DCI used for deactivation, the CG resource becomes invalid, and the terminal device may no longer send uplink data to the network device. The DCI used for deactivation may release a CG resource, and a format of the DCI used for deactivation may satisfy the following conditions.

Cyclic redundancy check (cyclic redundancy check, CRC) in the DCI is scrambled by using the CS-RNTI provided in the RRC signaling. HARQ process identifiers are set to all '0's, new data indicators (new data indicators, NDIs) are set to all '0's, redundancy versions (redundancy versions, RVs) are set to all '0's, the MCSs are set to all '1's, and the FDRA is set to all '1's.

In some special scenarios, the FDRA may alternatively be set to all '0's. This is not limited in this embodiment of this application. If the network device configures a plurality of CG resources for the terminal device, the HARQ process identifiers may not be all set to '0', and the network device may indicate a HARQ process identifier corresponding to a corresponding activated CG resource.

If transmission of the encoded tactile signal is performed according to the two CG transmission methods, a resource allocated by the network device to the terminal device is fixed, and an amount of data whose transmission is performed by the terminal device each time is fixed. However, a time point at which the encoded tactile signal arrives at the terminal device is irregular, and a data amount of a tactile packet that needs to be uploaded by the terminal device in each uplink slot is not fixed. If the network device allocates a relatively large CG resource to the terminal device, a resource waste is caused. If the network device allocates a relatively small CG resource to the terminal device, the terminal device cannot perform the transmission of the tactile packet in time. In other words, the data amount of the tactile packet that needs to be uploaded in each uplink slot is not fixed, and cannot adapt to a feature of the encoded tactile signal, and consequently, a service capacity is reduced.

For example, FIG. 7 is a diagram of transmission of a tactile packet based on a CG resource. As shown in FIG. 7, in an uplink slot, a data flow includes 20 tactile packets, and a resource allocated by a network device to a terminal device is insufficient to carry the 20 tactile packets. The terminal device may perform transmission of the tactile packets in a plurality of times. This results in a long transmission period of the tactile packets. In another uplink slot, a data flow includes zero tactile packets, and a resource allocated by the network device to the terminal device is not used, resulting in a CG resource waste.

In view of this, embodiments of this application provide a communication method and a communication apparatus. A network device may allocate a dedicated resource (which can be used by only one terminal device) and a shared resource (which can be used by a plurality of terminal devices) to a terminal device. When a relatively small amount of uplink data needs to be transmitted, the terminal device may send the uplink data on the dedicated resource. When a relatively large amount of uplink data needs to be transmitted, the terminal device may send the uplink data on the dedicated resource and the shared resource. In this implementation, when the amount of the data is large, the terminal device may send, by using the shared resource, data that cannot be carried by the dedicated resource, to avoid an excessively long transmission delay. When the amount of the data is small, another terminal device may occupy the shared resource, so that no resource waste is caused, and resource utilization is improved.

According to the communication method provided in this embodiment of this application, the uplink data transmitted by the terminal device may include data included in at least one of an encoded tactile signal, an encoded image signal, an encoded audio signal, or an encoded position signal. This is not limited in this embodiment of this application.

To better understand embodiments of this application, the following first describes a communication system to which embodiments of this application are applicable.

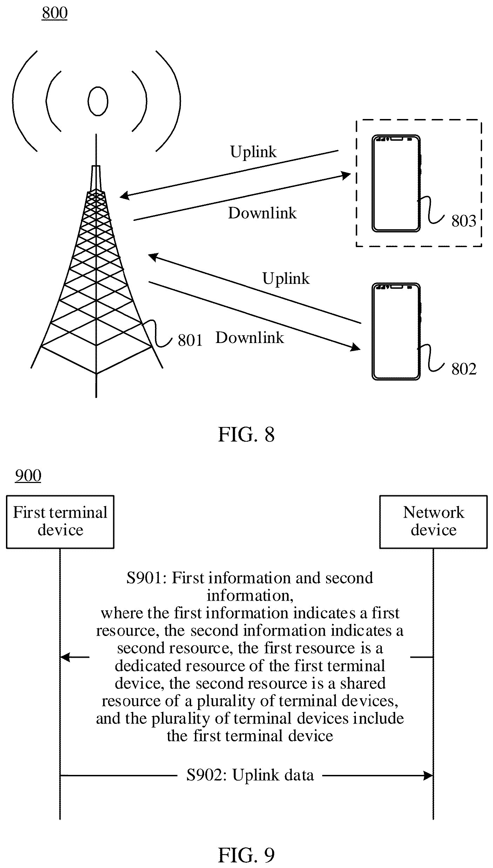

FIG. 8 is a diagram of a communication system 800 to which an embodiment of this application is applicable. As shown in FIG. 8, the communication system 800 includes a network device 801, a terminal device 802, and a terminal device 803. The terminal device 803 is optional. To be specific, this embodiment of this application may be applicable to a scenario in which a plurality of terminal devices communicate with the network device, or may be applicable to a scenario in which a single terminal device communicates with the network device.

The terminal device 802 may send uplink data or control information to the network device 801, and the network device 801 may send downlink data or control information to the terminal device 802. The terminal device 803 may send uplink data or control information to the network device 801, and the network device 801 may send downlink data or control information to the terminal device 803.

Technical solutions in embodiments of this application may be applied to various communication systems, for example, a wireless local area network (wireless local area network, WLAN) communication system, a long term evolution (long term evolution, LTE) system, an LTE frequency division duplex (frequency division duplex, FDD) system, an LTE time division duplex (time division duplex, TDD) system, a 5^{th} generation (5^{th} generation, 5G) mobile communication system or a new radio (new radio, NR) communication system, a worldwide interoperability for microwave access (worldwide interoperability for microwave access, WiMAX) communication system, or another evolved communication system. The 5G system usually includes the following three major application scenarios: an enhanced mobile broadband (enhanced mobile broadband, eMBB), ultra-reliable and low-latency communication (ultra-reliable and low-latency communication, URLLC), and massive machine-type communication (massive machine-type communication, mMTC), and also includes various future communication systems, for example, a 6G system.

The terminal device in embodiments of this application may also be referred to as user equipment (user equipment, UE), a mobile station (mobile station, MS), a mobile terminal (mobile terminal, MT), an access terminal, a subscriber unit, a subscriber station, a remote station, a remote terminal, a mobile device, a user terminal, a terminal, a wireless communication device, a user agent, a user apparatus, or the like.

The terminal device in embodiments of this application may be a mobile phone (mobile phone), a tablet computer (Pad), a computer with a wireless transceiver function, a virtual reality (VR) terminal device, an augmented reality (AR) terminal device, a wireless terminal in industrial control (industrial control), a tactile terminal device, an in-vehicle terminal device, a wireless terminal in unmanned driving, a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like.

The network device in embodiments of this application may be any device with wireless receiving and sending functions. The network device includes but is not limited to: an evolved NodeB (NodeB or eNB) in LTE, a gNodeB (gNodeB or gNB) or a transmission reception point (Transmission Reception Point, TRP) in NR, a subsequently evolved base station in 3GPP, an access node, a wireless relay node, a wireless backhaul node, and the like in a Wi-Fi system. The base station may be a macro base station, a micro base station, a picocell base station, a small cell, a relay station, a balloon station, or the like. The network device may alternatively be a server, a wearable device, an in-vehicle device, or the like.

To clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not represent a definite difference.

It should be noted that, in embodiments of this application, the word "example" or "for example" is used to represent giving an example, an illustration, or descriptions. Any embodiment or design scheme described as "example" or "for example" in this application should not be explained as being more preferred or having more advantages than another embodiment or design scheme. To be precise, use of the word such as "example" or "for example" is intended to present a related concept in a specific manner.

In embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally represents an "or" relationship between the associated objects. "At least one of the following items (pieces)" or a similar expression thereof represents any combination of these items, including a single item (piece) or any combination of a plurality of items (pieces). For example, at least one (piece) of a, b, or c may represent: a, b, c, a and b, a and c, b and c, or a, b, and c, where the a, b, and c may be singular or plural.

By using specific embodiments, the following describes in detail the technical solutions of this application and how to resolve the foregoing technical problem by using the technical solutions of this application. The following several specific embodiments may be implemented independently, or may be combined with each other. A same or similar concept or process may not be described again in some embodiments.

FIG. 9 is a schematic flowchart of a communication method 900 according to an embodiment of this application. The method 900 may be applied to the communication system in FIG. 8, but this embodiment of this application is not limited thereto.

As shown in FIG. 9, the method 900 may include the following steps.

S901: A network device sends first information and second information to a first terminal device, and correspondingly, the first terminal device receives the first information and the second information, where the first information indicates a first resource, the second information indicates a second resource, the first resource is a dedicated resource of the first terminal device, the second resource is a shared resource of a plurality of terminal devices, and the plurality of terminal devices include the first terminal device.

The first terminal device may be the terminal device 802 or the terminal device 803 in FIG. 8, and the network device may be the network device 801 in FIG. 8. However, this embodiment of this application is not limited thereto.

Both the first resource and the second resource may be at least one of a time domain resource, a space domain resource, or a frequency domain resource. The first resource is the dedicated resource of the first terminal device. In other words, the first terminal device can transmit the uplink data by using the first resource, and a terminal device other than the first terminal device cannot transmit uplink data by using the first resource. The second resource is the shared resource of the plurality of terminal devices. In other words, in addition to that the first terminal device can transmit the uplink data by using the second resource, another terminal device can also transmit uplink data by using the second resource. It may be understood that, the first terminal device is merely an example. The network device may allocate a dedicated resource and a shared resource to all terminal devices in a coverage area of the network device. The shared resource is shared by the plurality of terminal devices. This is equivalent to allocating a shared resource of a same size to each terminal device in addition to the dedicated resource.

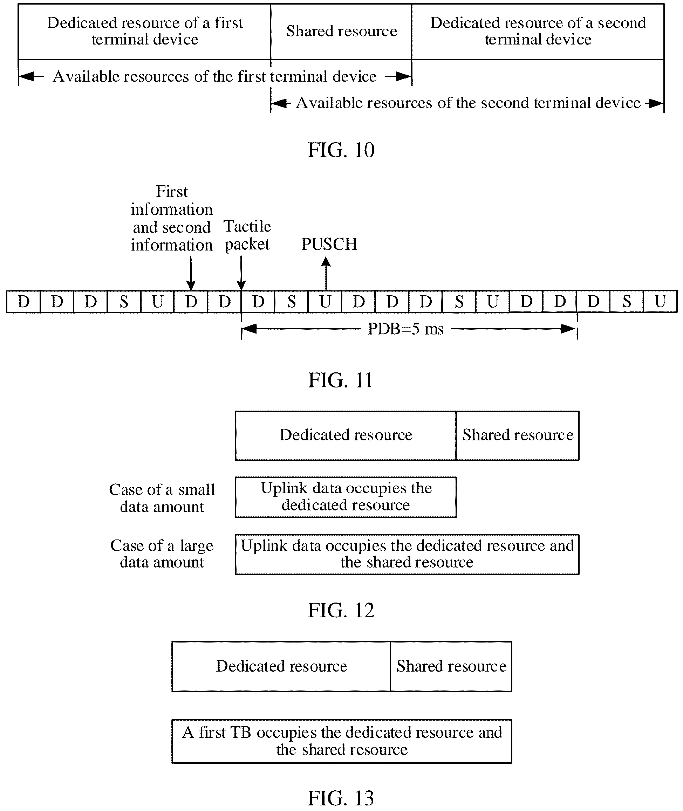

For example, FIG. 10 is a diagram of resource allocation. As shown in FIG. 10, the network device may allocate a dedicated resource of the first terminal device and a shared resource to the first terminal device, and may further allocate a dedicated resource of a second terminal device and the shared resource to the second terminal device. Both the first terminal device and the second terminal device may send the uplink data on the shared resource. When the first terminal device needs to send the uplink data, the dedicated resource of the first terminal device and the shared resource are available resources of the first terminal device, and the first terminal device may send the uplink data on the dedicated resource of the first terminal device, or on the dedicated resource of the first terminal device and the shared resource. When the second terminal device needs to send the uplink data, the dedicated resource of the second terminal device and the shared resource are available resources of the second terminal device, and the second terminal device may send the uplink data on the dedicated resource of the second terminal device, or on the dedicated resource of the second terminal device and the shared resource.

An amount of data that can be carried by the first resource and an amount of data that can be carried by the second resource are not limited in this embodiment of this application.

The network device may send the first information and the second information to the first terminal device in advance. In other words, the network device may allocate a resource to the first terminal device in advance. When the first terminal device needs to send the uplink data, the first terminal device may transmit the uplink data on the pre-allocated resource.

S902: The terminal device sends, on the first resource or on the first resource and the second resource, uplink data to the network device based on the first information and the second information, and correspondingly, the network device receives the uplink data.

When the first terminal device needs to send the uplink data, there are two possible cases in which the first terminal device sends the uplink data.

In a first case, the first terminal device sends, on the first resource, the uplink data to the network device, and correspondingly, the network device receives the uplink data on the first resource.

For example, when the first terminal device needs to send the uplink data, the first terminal device may calculate an amount of data in a buffer (Buffer). If the amount of the data in the buffer is less than or equal to the amount of the data that can be carried by the first resource, the first terminal device sends, on the first resource, the uplink data to the network device.

In this case, another terminal device may occupy the second resource, so that no resource waste is caused, and resource utilization is improved.

In a second case, the first terminal device sends, on the first resource and the second resource, the uplink data to the network device, and correspondingly, the network device receives the uplink data on the first resource and the second resource.

For example, when the first terminal device needs to send the uplink data, the first terminal device may calculate an amount of data in a buffer. If the amount of the data in the buffer is greater than the amount of the data that can be carried by the first resource, the first terminal device sends, on the first resource and the second resource, the uplink data to the network device.

If the uplink data is an encoded tactile signal, the first terminal device may calculate a data amount of a tactile packet in the buffer. If the data amount of the tactile packet in the buffer is greater than the amount of the data that can be carried by the first resource, the first terminal device sends, on the first resource and the second resource, the uplink data to the network device.

For example, FIG. 11 is a timing diagram of data transmission. A slot configuration is DDDSU, and a subcarrier spacing is 30 kHz. D indicates a downlink slot, S indicates an uplink-downlink switching slot, and U indicates an uplink slot. A length of each slot is 0.5 ms, and a delay requirement for transmission of a tactile packet is 5 ms.

Before a 2^{nd} uplink slot U, a first terminal device receives first information and second information that are sent by a network device, that is, receives a dedicated resource of the first terminal device and a shared resource. After receiving the first information and the second information that are sent by the network device, the first terminal device detects an encoded tactile packet, then the first terminal device may calculate a data amount of the tactile packet. If the data amount of the tactile packet is greater than an amount of data that can be carried by the dedicated resource of the first terminal device, the first terminal device sends the tactile packet on the dedicated resource of the first terminal device and a shared resource. In this implementation, a delay requirement that a packet delay budget PDB is 5 ms is not exceeded.

In this case, the first resource and the second resource may carry a large amount of data, to facilitate transmission of the uplink data in time.

It can be learned from the foregoing that when the first terminal device needs to send uplink data, the first terminal device may determine, based on an amount of the data, whether to use the second resource. If the amount of the data is less than or equal to the amount of the data that can be carried by the first resource, the first terminal device does not use the second resource, and sends the uplink data only by using the first resource; or if the amount of the data is greater than the amount of the data that can be carried by the first resource, the first terminal device sends the uplink data by jointly using the first resource and the second resource. The amount of the data that can be carried by the first resource is calculated by the first terminal device based on an MCS indicated by the network device and a quantity of time-frequency domain resources corresponding to the first resource.

For example, FIG. 12 is a diagram of resource occupation. As shown in FIG. 12, when an amount of data is small, to be specific, the amount of the data is less than or equal to an amount of data that can be carried by a first resource, uplink data may occupy only a dedicated resource. When an amount of data is large, to be specific, the amount of the data is greater than an amount of data that can be carried by a first resource, uplink data may occupy a dedicated resource and a shared resource.

According to the communication method provided in this embodiment of this application, the network device may allocate the dedicated resource and the shared resource to the terminal device. When a relatively small amount of uplink data needs to be transmitted, the terminal device may send the uplink data on the dedicated resource. When a relatively large amount of uplink data needs to be transmitted, the terminal device may send the uplink data on the dedicated resource and the shared resource. In this implementation, when the amount of the data is large, the terminal device may send, by using the shared resource, data that cannot be carried by the dedicated resource, to avoid an excessively long transmission delay. When the amount of the data is small, another terminal device may occupy the shared resource, so that no resource waste is caused, and resource utilization is improved.

The foregoing S901 in which the network device sends the first information and the second information to the first terminal device may include a plurality of possible implementations.

In a possible implementation, the network device sends the first information and the second information by using two pieces of signaling.

For example, the network device may send the first information by using first DCI, and send the second information by using second DCI. In other words, the first information is carried in the first DCI, and the second information is carried in the second DCI. A sending time point and a sending sequence of the first DCI and the second DCI are not limited in this embodiment of this application. The first DCI may also be denoted as DCI-1, and the second DCI may also be denoted as DCI-2. This is not limited in this embodiment of this application.

In this implementation, different pieces of information are indicated by different pieces of DCI, so that a small quantity of bytes of the DCI is occupied.

To enable the first terminal device to distinguish between dedicated resources and shared resources, the network device may indicate, by using a first identifier, whether an allocated resource is a shared resource, or may perform scrambling by using different RNTIs.

In an example, both the first DCI and the second DCI include a first identifier, and the first identifier indicates a dedicated resource or a shared resource. The first identifier may also be referred to as a first bit. This is not limited in this embodiment of this application.

The first DCI includes a first identifier, and the first identifier indicates that a first resource allocated by using the first DCI is a dedicated resource. The second DCI includes a first identifier, and the first identifier indicates that a second resource indicated by the first DCI is a shared resource.

For example, the first identifier is a first bit. When a first bit of the first DCI is 0, the first resource allocated by using the first DCI is a dedicated resource. When a first bit of the second DCI is 1, the first resource allocated by using the second DCI is a dedicated resource. Alternatively, when a first bit of the first DCI is 1, the first resource allocated by using the first DCI is a dedicated resource. When a first bit of the second DCI is 0, the first resource allocated by using the second DCI is a dedicated resource.

In another example, the first DCI and the second DCI are scrambled by using different RNTIs.

The first terminal device may determine, based on the RNTIs, that a dedicated resource is allocated by using the first DCI and a shared resource is allocated by using the second DCI.

In addition, a slot in which the first resource is located is the same as a slot in which the second resource is located. In other words, the first DCI and the second DCI indicate a same slot for the first terminal device to perform uplink data transmission. In this implementation, the first terminal device may simultaneously send the uplink data on the first resource and the second resource. This helps send the uplink data in time, and improves a data transmission rate.

In another possible implementation, the network device sends the first information and the second information by using one piece of signaling.

For example, the network device may send the first information and the second information by using third DCI. In other words, both the first information and the second information are carried in the third DCI.

**In** this implementation, different pieces of information are indicated by the same DCI, so that signaling can be saved.

To enable the first terminal device to distinguish between dedicated resources and shared resources, the network device may indicate the resources by using different FDRA fields.

For example, the third DCI includes a first FDRA field and a second FDRA field, the first FDRA field indicates a position of the first resource, and the second FDRA field indicates a position of the second resource; or the first FDRA field indicates a position of the second resource, and the second FDRA field indicates a position of the first resource. This is not limited in this embodiment of this application.

In the method 900, if the first terminal device sends, on the first resource and the second resource, uplink data to the network device, uplink data sent on the first resource by the first terminal device and uplink data sent by the first terminal device on the second resource may belong to a same TB, or may belong to different TBs.

In an example, the first terminal device sends, on the first resource, a first part of data in a first TB to the network device, and sends, on the second resource, a second part of data in the first TB to the network device. In other words, the first TB occupies the dedicated resource and the shared resource.

For example, FIG. 13 is a diagram of resource occupation. As shown in FIG. 13, a first terminal device may send, on a first resource and a second resource, one TB, that is, a first TB, of uplink data. In this case, the first TB occupies a dedicated resource and a shared resource.

If the first resource and the second resource are indicated by different pieces of DCI, for example, first DCI and second DCI, a HARQ process identifier of the first DCI is the same as a HARQ process identifier of the second DCI. This indicates that the first terminal device may send one TB of uplink data on the first resource and the second resource.

**In** this implementation, the first terminal device sends one TB of the uplink data on the first resource and the second resource, and one TB corresponds to one MCS. This helps reduce complexity of encoding and decoding.

**In** another example, the first terminal device sends, on the first resource, the first TB to the network device, and sends, on the second resource, a second TB to the network device. In other words, the first terminal device sends, on the first resource, one TB to the network device, and sends, on the second resource, another TB to the network device. In other words, the first terminal device may send a TB of uplink data on each of the dedicated resource and the shared resource.

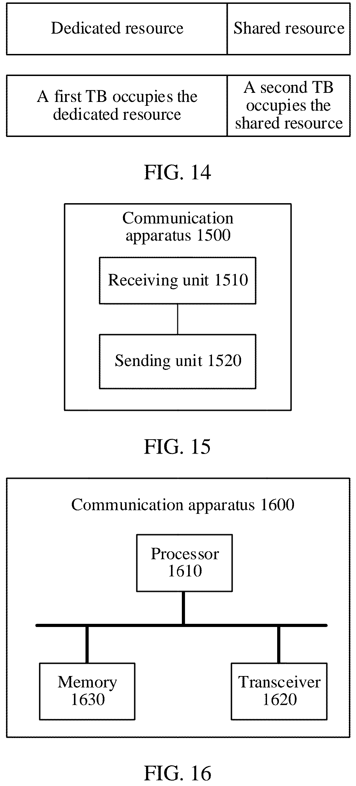

For example, FIG. 14 is a diagram of another resource occupation. As shown in FIG. 14, a first terminal device may send a TB of uplink data on each of a first resource and a second resource. Specifically, the first terminal device may send a first TB on the first resource, and send a second TB on the second resource. In this case, the first TB occupies a dedicated resource, and the second TB occupies a shared resource.

If the first resource and the second resource are indicated by different pieces of DCI, for example, first DCI and second DCI, a HARQ process identifier of the first DCI is different from a HARQ process identifier of the second DCI. This indicates that the first terminal device may send a TB of uplink data on each of the first resource and the second resource.

In this implementation, the first terminal device sends a TB of the uplink data on each of the first resource and the second resource. Different TBs may correspond to different MCSs, and may be used in different scenarios, so that flexibility is higher.

The first terminal device may use independent MCSs on different resources. The first resource is a dedicated resource, and the second resource is a shared resource. The shared resource may be used by a plurality of users together. This results in increased interference. Therefore, a lower MCS may be used on the second resource. In other words, an MCS order corresponding to the second resource may be less than an MCS order corresponding to the first resource.

In an example, if the first resource and the second resource are indicated by third DCI, the third DCI may include an MCS offset, and the MCS offset indicates an MCS deviation of the second resource relative to the first resource. The third DCI may further indicate an MCS of the first resource. The first terminal device receives the third DCI, and may determine the MCS of the first resource and an MCS of the second resource based on the third DCI. The MCS of the second resource is equal to the MCS of the first resource minus the MCS offset.

In this implementation, in comparison with directly indicating the MCS of the second resource, MCS offset indication information is added to the third DCI, so that fewer bits can be occupied.

In another example, if the first resource and the second resource are indicated by third DCI, the third DCI may include an MCS of the second resource and an MCS of the first resource. The first terminal device receives the third DCI, and may determine the MCS of the first resource and the MCS of the second resource based on the third DCI.

In this implementation, in comparison with indicating an MCS offset, the MCS of the second resource is added to the third DCI. This is more direct, simple, and convenient.

In an optional embodiment, when uplink data is sent on the first resource and the second resource, data sent by the first terminal device on the second resource includes data of a first logical channel group.

The first logical channel group may be one logical channel group, or may be a plurality of logical channel groups. This is not limited in this embodiment of this application. The data of the first logical channel group may be understood as data whose transmission is performed on the first logical channel group. In an example, a logical channel group in which a tactile signal or a tactile packet is located is the first logical channel group.

To avoid using the second resource for data of low importance, the first terminal device may perform sending by using the second resource when a specific amount of data exceeds an amount of data that can be carried by the first resource. The data of the first logical channel group indicates data of high importance, and the first terminal device may send the data of the first logical channel group on the second resource.

In this implementation, the data of the first logical channel group is sent on the second resource. This helps increase a data transmission rate of the first logical channel group.

That the data of the first logical channel group is the data of high importance may be preset by the first terminal device, or may be indicated by the network device. This is not limited in this embodiment of this application.

If the network device indicates that the shared resource can be used for the data of the first logical channel group, the foregoing method 900 may further include: The network device sends third information to the first terminal device, and correspondingly, the first terminal device receives the third information, where the third information indicates to use the second resource when an amount of the data of the first logical channel group is greater than an amount of data that can be carried by the first resource.

The third information may be carried in RRC signaling. However, this embodiment of this application is not limited thereto. The network device may send the third information to the first terminal device by using the RRC signaling. The first terminal device receives the third information, and determines whether the amount of the data of the first logical channel group is greater than the amount of the data that can be carried by the first resource. If the amount of the data of the first logical channel group is greater than the amount of the data that can be carried by the first resource, the first terminal device sends the data of the first logical channel group on the first resource and the second resource.

For example, if there are eight logical channel groups, the eight logical channel groups are: a logical channel group 1, a logical channel group 2, a logical channel group 3, a logical channel group 4, a logical channel group 5, a logical channel group 6, a logical channel group 7, and a logical channel group 8. The network device may indicate, by using the third information, the first terminal device to use the second resource when a data amount of the logical channel group 3 is greater than an amount of data that can be carried by the first resource. The first terminal device may send, on the second resource, the data of the logical channel group 3 based on the third information.

In this implementation, the network device indicates that the second resource is used for specific data when an amount of the data is greater than the amount of the data that can be carried by the first resource, so that resources can be used properly.

In an optional embodiment, when the first terminal device sends, on the first resource and the second resource, the uplink data to the network device in S902, the method 900 further includes: The first terminal device sends fourth information to the network device; and correspondingly, the network device receives the fourth information, where the fourth information indicates that the first terminal device has sent the uplink data on the second resource.

To enable the network device to accurately obtain the uplink data sent by the first terminal device, if the first terminal device has sent the uplink data on the second resource, the first terminal device may notify, by using the fourth information, the network device that the first terminal device has sent the uplink data on the second resource, and the network device may obtain, from the first resource and the second resource, based on the fourth information, the uplink data sent by the first terminal device.

In this implementation, the network device can accurately obtain the uplink data sent by the first terminal device.

Optionally, that the first terminal device sends the fourth information to the network device may include: The first terminal device sends, on the first resource, the fourth information to the network device.

The fourth information may be carried in uplink control information (uplink control information, UCI) and occupy the first resource. The first terminal device sends, on the first resource, the fourth information to the network device through a PUSCH.

The second resource is the shared resource, and interference is relatively large. In comparison with occupying the second resource, the fourth information occupies the first resource and interference is relatively small. This helps improve accuracy of obtaining the fourth information by the network device.

Sequence numbers of the foregoing processes do not mean execution sequences. The execution sequences of the processes should be determined based on functions and internal logic of the processes, and should not constitute any limitation on implementation processes of embodiments of this application.

The foregoing describes in detail the communication method in embodiments of this application with reference to FIG. 1 to FIG. 14. The following describes in detail a communication apparatus in embodiments of this application with reference to FIG. 15 and FIG. 16.

FIG. 15 is a block diagram of a communication apparatus 1500 according to an embodiment of this application. The communication apparatus 800 may include a receiving unit 1510 and a sending unit 1520.

In a possible implementation, the communication apparatus 1500 may perform the steps performed by the first terminal device in the method 900.

The receiving unit 1510 is configured to receive first information and second information, where the first information indicates a first resource, the second information indicates a second resource, the first resource is a dedicated resource of the communication apparatus, the second resource is a shared resource of a plurality of terminal devices, and the plurality of terminal devices include the communication apparatus. The sending unit 1520 is configured to send uplink data on the first resource or on the first resource and the second resource.

In another possible implementation, the communication apparatus 1500 may perform the steps performed by the network device in the method 900.

The sending unit 1520 is configured to send first information and second information, where the first information indicates a first resource, the second information indicates a second resource, the first resource is a dedicated resource of a first terminal device, the second resource is a shared resource of a plurality of terminal devices, and the plurality of terminal devices include the first terminal device. The receiving unit 1510 is configured to receive, on the first resource or on the first resource and the second resource, uplink data from the first terminal device.

It should be understood that the communication apparatus 1500 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the communication apparatus 1500 may be specifically the first terminal device or the network device in the foregoing embodiments, and the communication apparatus 1500 may be configured to perform procedures and/or steps corresponding to the first terminal device or the network device in the foregoing method embodiments. To avoid repetition, details are not described herein again.

The communication apparatus 1500 in the foregoing solutions has a function of implementing corresponding steps performed by the first terminal device or the network device in the foregoing methods. The foregoing function may be implemented through hardware, or may be implemented by hardware executing corresponding software. The hardware or the software includes one or more modules corresponding to the foregoing function.

In this embodiment of this application, the communication apparatus 1500 in FIG. 15 may alternatively be a chip or a chip system, for example, a system on chip (system on chip, SoC).

FIG. 16 is a block diagram of another communication apparatus 1600 according to an embodiment of this application. The communication apparatus 1600 includes a processor 1610, a transceiver 1620, and a memory 1630. The processor 1610, the transceiver 1620, and the memory 1630 communicate with each other through an internal connection path. The memory 1630 is configured to store instructions. The processor 1610 is configured to execute the instructions stored in the memory 1630, to control the transceiver 1620 to send a signal and/or receive a signal.

It should be understood that the communication apparatus 1600 may be specifically the first terminal device or the network device in the foregoing embodiments, and may be configured to perform the steps and/or procedures corresponding to the first terminal device or the network device in the foregoing method embodiments. Optionally, the memory 1630 may include a read-only memory and a random access memory, and provides instructions and data for the processor. A part of the memory may further include a non-volatile random access memory. For example, the memory may further store information of a device type. The processor 1610 may be configured to execute the instructions stored in the memory. When the processor 1610 executes the instructions stored in the memory, the processor 1610 is configured to perform the steps and/or procedures corresponding to the first terminal device or the network device in the foregoing method embodiments. The transceiver 1620 may include a transmitter and a receiver. The transmitter may be configured to implement steps and/or procedures that correspond to the transceiver and that are for performing a sending action, and the receiver may be configured to implement steps and/or procedures that correspond to the transceiver and that are for performing a receiving action.

It should be understood that, in embodiments of this application, the processor of the foregoing apparatus may be a central processing unit (central processing unit, CPU). Alternatively, the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by a combination of hardware and software units in the processor. A software unit may be located in a mature storage medium in the art, such as a random access memory, a flash memory, a read-only memory, a programmable read-only memory, an electrically erasable programmable memory, or a register. The storage medium is located in the memory, and the processor reads the instructions in the memory and completes the steps in the foregoing methods in combination with hardware of the processor. To avoid repetition, details are not described herein again.

An embodiment of this application further provides a communication system. The communication system may include the first terminal device and the network device in the foregoing embodiments.

An embodiment of this application provides a readable computer storage medium. The readable computer storage medium is configured to store a computer program, and the computer program is used to implement the method corresponding to the first terminal device shown in the possible implementations in the foregoing embodiments.

An embodiment of this application provides another readable computer storage medium. The readable computer storage medium is configured to store a computer program, and the computer program is used to implement the method corresponding to the network device shown in the possible implementations in the foregoing embodiments.

An embodiment of this application provides a computer program product. The computer program product includes a computer program (which may also be referred to as code or instructions). When the computer program is run on a computer, the computer may perform the method corresponding to the first terminal device shown in the foregoing embodiments.

An embodiment of this application provides another computer program product. The computer program product includes a computer program (which may also be referred to as code or instructions). When the computer program is run on a computer, the computer may perform the method corresponding to the network device shown in the possible implementations in the foregoing embodiments.

An embodiment of this application provides a chip system. The chip system is configured to support the foregoing first terminal device in implementing the functions shown in embodiments of this application.

An embodiment of this application provides another chip system. The chip system is configured to support the foregoing network device in implementing the functions shown in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular application and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, the unit division is merely logical function division and may be another division in actual implementation. For example, a plurality of units or components may be combined or integrated into another system, or some features may be ignored or not performed. In addition, the displayed or discussed mutual couplings, direct couplings or communication connections may be implemented through some interfaces. Indirect couplings or communication connections between the apparatuses or units may be implemented in electronic, mechanical, or other forms.

Units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

**In** addition, functional units in embodiments of this application may be integrated into one processing unit, each of the units may exist alone physically, or two or more units may be integrated into one unit.

When functions are implemented in a form of a software functional unit and sold or used as an independent product, the functions may be stored in a computer-readable storage medium. Based on this understanding, the technical solution of this application essentially, or a part contributing to the conventional technology, or a part of the technical solution may be implemented in a form of a software product. The computer software product is stored in a storage medium, and includes several instructions for instructing a computer device (which may be a personal computer, a server, a receiver, or the like) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit a protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first terminal device, wherein the method comprises:
receiving first information and second information, wherein the first information indicates a first resource, the second information indicates a second resource, the first resource is a dedicated resource of the first terminal device, the second resource is a shared resource of a plurality of terminal devices, and the plurality of terminal devices comprise the first terminal device; and
sending uplink data on the first resource or on the first resource and the second resource.

2. The method according to claim 1, wherein the first information is carried in first downlink control information DCI, and the second information is carried in second DCI.

3. The method according to claim 2, wherein a slot in which the first resource is located is the same as a slot in which the second resource is located.

4. The method according to claim 2 or 3, wherein both the first DCI and the second DCI comprise a first identifier, and the first identifier indicates a dedicated resource or a shared resource.

5. The method according to claim 2 or 3, wherein the first DCI and the second DCI are scrambled by using different radio network temporary identifiers RNTIs.

6. The method according to claim 1, wherein both the first information and the second information are carried in third DCI.

7. The method according to claim 6, wherein the third DCI comprises a first frequency domain resource allocation FDRA field and a second FDRA field, the first FDRA field indicates a position of the first resource, and the second FDRA field indicates a position of the second resource.

8. The method according to claim 6 or 7, wherein the third DCI comprises a modulation and coding scheme MCS offset, and the MCS offset indicates an MCS deviation of the second resource relative to the first resource.

9. The method according to any one of claims 1 to 8, wherein when the uplink data is sent on the first resource and the second resource, data sent by the first terminal device on the second resource comprises data of a first logical channel group.

10. The method according to claim 9, wherein the method further comprises:
receiving third information, wherein the third information indicates to use the second resource when an amount of the data of the first logical channel group is greater than an amount of data that can be carried by the first resource.

11. The method according to any one of claims 1 to 10, wherein when the uplink data is sent on the first resource and the second resource, the method further comprises:
sending fourth information, wherein the fourth information indicates that the first terminal device has sent the uplink data on the second resource.

12. The method according to claim 11, wherein sending the fourth information comprises:
sending the fourth information on the first resource.

13. A communication method, applied to a network device, wherein the method comprises:
sending first information and second information, wherein the first information indicates a first resource, the second information indicates a second resource, the first resource is a dedicated resource of a first terminal device, the second resource is a shared resource of a plurality of terminal devices, and the plurality of terminal devices comprise the first terminal device; and
receiving, on the first resource or on the first resource and the second resource, uplink data from the first terminal device.

14. The method according to claim 13, wherein the first information is carried in first downlink control information DCI, and the second information is carried in second DCI.

15. The method according to claim 14, wherein a slot in which the first resource is located is the same as a slot in which the second resource is located.

16. The method according to claim 14 or 15, wherein both the first DCI and the second DCI comprise a first identifier, and the first identifier indicates a dedicated resource or a shared resource.

17. The method according to claim 14 or 15, wherein the first DCI and the second DCI are scrambled by using different radio network temporary identifiers RNTIs.

18. The method according to claim 13, wherein both the first information and the second information are carried in third DCI.

19. The method according to claim 18, wherein the third DCI comprises a first frequency domain resource allocation FDRA field and a second FDRA field, the first FDRA field indicates a position of the first resource, and the second FDRA field indicates a position of the second resource.

20. The method according to claim 18 or 19, wherein the third DCI comprises a modulation and coding scheme MCS offset, and the MCS offset indicates an MCS deviation of the second resource relative to the first resource.

21. The method according to any one of claims 13 to 20, wherein when the uplink data from the first terminal device is received on the first resource and the second resource, data received on the second resource comprises data of a first logical channel group.

22. The method according to claim 21, wherein the method further comprises:
sending third information, wherein the third information indicates the first terminal device to use the second resource when an amount of the data of the first logical channel group is greater than an amount of data that can be carried by the first resource.

23. The method according to any one of claims 13 to 22, wherein when the uplink data from the first terminal device is received on the first resource and the second resource, the method further comprises:
receiving fourth information, wherein the fourth information indicates that the first terminal device has sent the uplink data on the second resource.

24. The method according to claim 23, wherein receiving the fourth information comprises:
receiving the fourth information on the first resource.

25. A communication apparatus, comprising a receiving unit and a sending unit, wherein the receiving unit is configured to perform a receiving operation in the communication method according to any one of claims 1 to 12, and the sending unit is configured to perform a sending operation in the communication method according to any one of claims 1 to 12.

26. A communication apparatus, comprising a sending unit and a receiving unit, wherein the sending unit is configured to perform a sending operation in the communication method according to any one of claims 13 to 24, and the receiving unit is configured to perform a receiving operation in the communication method according to any one of claims 13 to 24.

27. A communication apparatus, comprising a transmitter, a receiver, and a processor, wherein the transmitter is configured to send a signal to another apparatus, the receiver is configured to receive a signal from the another apparatus, the processor is coupled to a memory, the memory is configured to store a computer program, and when the processor invokes the computer program, the communication apparatus is enabled to perform the method according to any one of claims 1 to 12.

28. A communication apparatus, comprising a transmitter, a receiver, and a processor, wherein the transmitter is configured to send a signal to another apparatus, the receiver is configured to receive a signal from the another apparatus, the processor is coupled to a memory, the memory is configured to store a computer program, and when the processor invokes the computer program, the communication apparatus is enabled to perform the method according to any one of claims 13 to 24.

29. A chip system, comprising a processor, configured to: invoke a computer program from a memory and run the computer program, to enable a communication device on which the chip system is installed to perform the method according to any one of claims 1 to 12.

30. A chip system, comprising a processor, configured to: invoke a computer program from a memory and run the computer program, to enable a communication device on which the chip system is installed to perform the method according to any one of claims 13 to 24.

31. A communication system, comprising the communication apparatus according to claim 25 or claim 27 and the communication apparatus according to claim 26 or claim 28.

32. A computer-readable storage medium, wherein the computer-readable storage medium stores a computer program, when the computer program is run on a computer, the method according to any one of claims 1 to 12 or the method according to any one of claims 13 to 24 is performed.

33. A computer program product, wherein the computer program product comprises instructions, when the instructions are executed, the method according to any one of claims 1 to 12 or the method according to any one of claims 13 to 24 is performed.
